(19) Europäisches Patentamt
European Patent Office
Office européen des brevets

(11) **EP 2 523 486 A1**

(12) **EUROPEAN PATENT APPLICATION**
published in accordance with Art. 153(4) EPC

(43) Date of publication:
**14.11.2012 Bulletin 2012/46**

(51) Int Cl.:
*H04W 12/06* (2009.01)    *H04W 12/04* (2009.01)
*H04L 9/32* (2006.01)

(21) Application number: **10841076.2**

(22) Date of filing: **14.01.2010**

(86) International application number:
**PCT/KR2010/000220**

(87) International publication number:
**WO 2011/081242 (07.07.2011 Gazette 2011/27)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **04.01.2010   KR 20100000176**

(71) Applicant: **Korea Electronics Technology Institute
Gyeonggi Province 463-816 (KR)**

(72) Inventors:
• **LEE, Jang Yeon**
  **Seongnam-si**
  **Gyeonggi-do 463-050 (KR)**
• **YI, Okyeon**
  **Seoul 136-102 (KR)**
• **CHO, JinWoong**
  **Seoul 153-013 (KR)**
• **LEE, Hyun Seok**
  **Goyang-si**
  **Gyeonggi-do 412-223 (KR)**
• **KANG, Ju Sung**
  **Seoul 136-102 (KR)**

(74) Representative: **Peter, Julian
Staeger & Sperling
Partnerschaftsgesellschaft
Sonnenstrasse 19
80331 München (DE)**

(54) **KEY AUTHENTICATION METHOD FOR BINARY CDMA**

(57)    A key authentication method between UE and SN for binary CDMA network and a key re-authentication method during UE performs handover within the same SN in binary CDMA network are provided.

The key authentication method for the user terminal may comprise steps of receiving terminal authentication request message from wireless access point, transmitting terminal authentication response message that comprises identification information for the user terminal, receiving user authentication request message that comprises at least two random numbers and code information for message authentication from the wireless access point, and transmitting user authentication response message that comprises a first information that is generated using master key.

FIG. 5

EP 2 523 486 A1

**Description**

**<u>CROSS-REFERENCE TO RELATED APPLICATIONS</u>**

This application claims, the benefit under 35 U.S.C. § 119(a) of a Korean Patent Application No. 10-2010-0000176 filed with the Korean Intellectual Property Office on January 4, 2010, the entire disclosure of which is incorporated herein by reference for all purposes.

**FIELD OF THE INVENTION**

The following description relates to secure key authentication methods for binary CDMA network and, more particularly, to methods for key authentication between UE and SN and key re-authentication for handover in the binary CDMA network.

**BACKGROUND**

Binary CDMA technology is designed to resolve frequency allocation problem in accordance with the coexistence of various wireless technologies such as WLAN, Bluetooth and QoS related problem. Also, Koinonia system, based on the binary CDMA technology and approved as international standard by ISO/IEC JTCSC6 in January, 2009, has interoperability with various prior technologies, provides QoS under noisy wireless environment, and does not interfere existing communication system. Recently, Guardian technology, applied with wireless encryption technology, is under development based on the binary CDMA technology. Accordingly, various research projects for adapting the guardian technology to various wireless communication systems are actively in progress.

However, various security threats are increasing in wireless environment. As a result, many damages take place such as private and public information leakage or serious system damage. Although security-enhanced IEEE 802.11 is recommended for IEEE 802.11 WLAN which is broadly used in recent times, it does not provide expected security due to cost or management problem. Consequently, public network or some organizations usage of limited and embedded secure functions is increasing continuously.

Moreover, it is obligatory to apply encryption technology for security product introduced to public organization in public network construction. Therefore, it is still inappropriate for public network to apply IEEE.11i WLAN using advanced encryption standard.

**BRIEF DESCRIPTION OF THE DRAWINGS**

Fig. 1 is a diagram briefly illustrating the Koinonia system.
Fig. 2 illustrates a structure of BLAN(Binary CDMA LAN).
Fig. 3 is an illustration which shows two exemplary of handover.
Fig. 4 illustrates an authentication protocol key structure.
Fig. 5 is a flow which shows BLAN-AKA process.
Fig. 6 is a flow which shows key authentication process of BLAN-AKA,
Fig. 7 illustrates re-authentication process for intra-BVLR handover that UE moves from RAP#1-1 to RAP#1-2 when RAP#1-1 and RAP#1-2 hold connection with same BVLR#1.

**SUMMARY OF THE INVENTION**

In one general aspect, provided is key authentication methods between UE and SN for binary CDMA network.

In the key authentication method, a system may comprise at least one user terminal for storing master key for authentication, a serving network that comprises wireless access point(RAP) and visitor location register unit(VLR), and home network that comprises an authentication server and home location register unit(HLR).

The key authentication method at the user terminal may comprise steps of receiving terminal authentication request message from wireless access point, transmitting terminal authentication response message that comprises identification information for the user terminal, receiving user authentication request message that comprises at least two random numbers and code information for message authentication from the wireless access point, and transmitting user authentication response message that comprises the first information that is generated using master key.

The key authentication method at the serving network may comprise steps of receiving terminal authentication response message that comprises identification information for user terminal from the user terminal that transmits terminal authentication request message, transmitting authentication data request message that comprises said identification information to the home network, receiving authentication data response message that comprises the first random number, a temporal key and the first information from the home network, and transmitting user authentication request message that comprises the first random number, the second random number and code information for message authentication to the user terminal.

In another aspect, provided is key re-authentication methods when UE performs handover within same SN in binary CDMA network.

In another aspect, provided is user authentication using BSIM, re-authentication protocol using BVLR for better mobility support.

Other features and aspects will be apparent from the following detailed description, the drawings, and the claims.

## DETAILED DESCRIPTION

The following detailed description is provided to assist the reader in gaining a comprehensive understanding of the methods, apparatuses, and/or systems described herein. Accordingly, various changes, modifications, and equivalents of the methods, apparatuses, and/or systems described herein will be suggested to those of ordinary skill in the art. Also, descriptions of well-known functions and constructions may be omitted for increased clarity and conciseness. Changes, modifications, and equivalents of the methods, and/or systems described herein will be suggested to those of ordinary skill in the art. Also, descriptions of well-known functions and constructions may be omitted for increased clarity and conciseness.

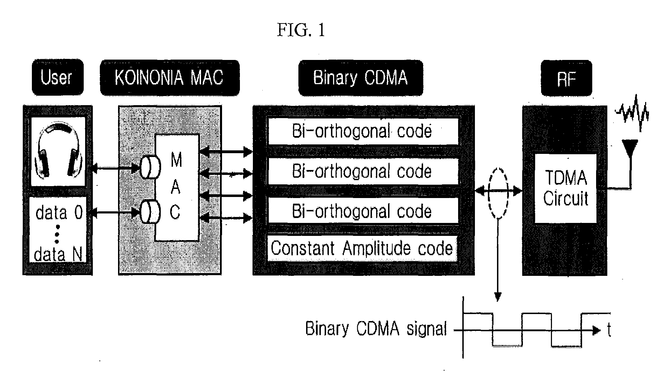

FIG. 1 briefly illustrates an example of the Koinonia system. The Koinonia system has physical layer and data link layer. The data link layer has media access(MAC) sub-layer and adaptation sub-layer. The media access sub-layer may use Hybird multiple access(HMA) mode that performs media access through the combination of code and time slot based on the characteristics of bynary CDMA of the physical layer. The binary CDMA has a structure that binarizes modulated signals of various level, generated according to multiple-code CDMA, and transmits as TDMA signals. The binary CDMA has both merits of CDMA that is robust against noise and TDMA that consumes less power and has high speed transmission capacity. The adaptation sub-layer interconnects between lower protocol stacks and higher protocol stacks of other wireless standards.

The Koinonia system ensures QoS in noisy wireless environment, provides interoperability by combining various digital devices into one network (Koinonia network), and provides characteristic of interference-free to other communication systems when the Koinonia system and the other systems coexist. Especially, the Koinonia system overcomes the problems of prior short range wireless communication technologies such as Bluetooth, IEEE 802.11b by finding solutions to interference problem in complex wireless environment and power consumption problem.

Table 1 shows the characteristics of various short range wireless communication technologies.

TABLE 1

|  | Koinonia | Bluetooth | IEEE 802.11b | UWB |
|---|---|---|---|---|
| Service range | 10~100m | 10~100m | 10~100m | 1~10m |
| QoS | ○ | Δ | X | Δ |
| Module | Binary CDMA | FHSS : GFSK | DSSS : QPSK/CCK | CDMA : PSK DFDM : QPSK |
| Network Topology | Ad-hoc/ Infra | Ad-hoc | Ad-hoc/ Infra | Ad-hoc/ Infra |
| Leading country of International Standard | Korea | Japan | U.S.A | U.S.A |

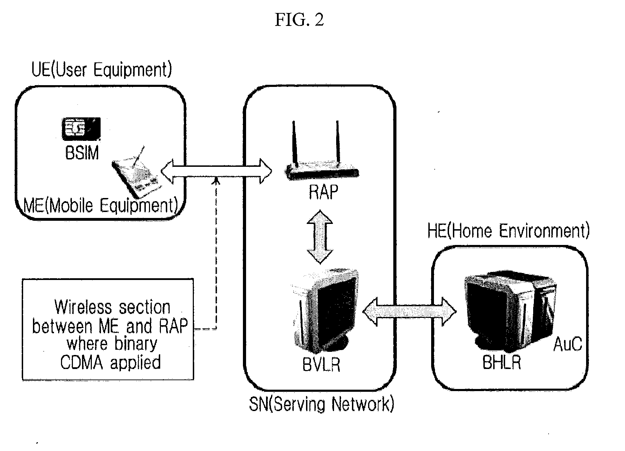

FIG. 2 illustrates a structure of BLAN (Binary CDMA LAN). The BLAN has a wire-and-wireless structure and comprises UE (user equipment), SN (serving network), and HE (home environment, home network (HN)). UE and SN are interconnected with each other through wireless network. SN and HE are interconnected with each other through wired network.

UE, user area of BLAN, has BSIM (Binary CDMA Subscriber Identity Module) and ME (Mobile Equipment). BSIM, owned by each user, is a device for identifying and authenticating subscribers. That is, BSIM has encryption algorithm for user authentication and service profile of subscriber, and performs similar functions to 3G USIM (Universal Subscriber Identity Module). ME is a device that provides an interface for all physical connections in wireless connections and an interface for interaction with BSIM.

SN, a service provider for providing various services to users, has RAP (Radio Access Point) and BVLR (BLAN Visitor Location Register). RAP, an access device for connecting a user to a network, provides wireless interface to ME using binary CDMA. BVLR manages RAPs in its own area, and provides authentication services to users through interaction with HE.

BVLR may enhance overall network security by minimizing direct exposure of important confidential information such as user information, authentication information through preventing direct authentication of RAP that is exposed to relatively more physical security threats. Moreover, BVLR performs substantive authentication process, enables re-authentication protocol in accordance with handover, and provides high mobility by efficiently managing handover between RAPs in the same BVLR. BVLR is also adaptive in adding partial small networks. A network that includes one BVLR and necessary number of RAPs may be easily added to particular area and may be managed by different security level in comparison with connected network.

HE has private information and authority information of user and supports BLAN-AKA(Authentication and Key Agreement) mechanism. HE has BHLR (BLAN Home Location Register) and authentication server (AuC). BHLR, a database for managing users, maintains subscribers profile and related information, and information relates to BVLR. AuC stores data that is required for authentication of each user, encryption and integrity, stores functions for generating master key (MK) that is distributed to each user and required other keys, and generates data that is required for authentication when a user requests authentication. Although BHLR and AuC are logically different, they may be implemented as physically same.

As mentioned above, BLAN is a network that wired and wireless networks coexist. Regarding the security of the BLAN, wireless communication part between UE and SN is essential. In security point of view, communication part between SN and HE is not substantially different from prior wired network, and communication part between RAP and BVLR in SN may be merely considered as extension of the communication part between SN and HE. Therefore, it may be presumed that safe channels are established in wired communication part of BLAN and safety of mutual authentication and all communication is ensured among each entity in wired communication part of BLAN.

The object of the mutual authentication may be the SN that is authorized authentication from US and HE. Communication network between UE and SN is the object of mutual authentication. The authentication is performed through message exchanges between a user and a network. After the authentication the user may trust to the connected network.

Secrecy may be divided into 2 types, one is user secrecy and the other is user-data secrecy. The user secrecy which uses temporal identification information instead of ID of the user is used for the protection of user location information and user related private information. The user-data secrecy is used for the protection of the data between UE and RAP. The user-data secrecy may be implemented by using block encryption algorithm after success completion of authentication (using authentication protocol).

Integrity is required to authenticate origin and content of a message. To investigate whether unintended or intended changes of message content exist, integrity check algorithm is implemented by using Message Authentication Code (MAC) algorithm.

Handover is performed for the continuity of service is wireless network. BLAN performs handover when an UE is moving from one RAP to another RAP. More frequent handovers might be expected than any other wireless network. For supporting frequent handovers, it is better to define a new authentication protocol, re-authentication protocol, which is different from AKA protocol.

However, it might be inefficient to apply same re-authentication protocol to all kinds of handovers. Therefore, handover type is identified before applying re-authentication protocol.

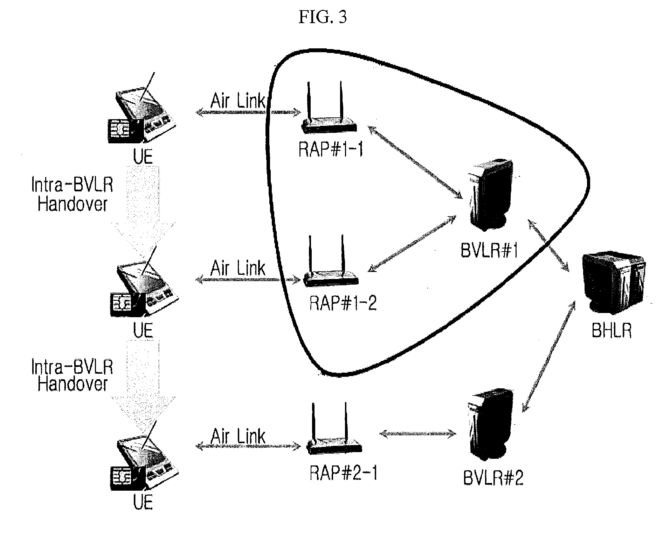

FIG. 3 illustrates two exemplary of handovers. Intra-BVLR handover is handover performed in one BVLR. That is, Intra-BVLR handover is the handover that is performed when UE is moving among RAPs of one BVLR. According to FIG. 3, the Intra-BVLR handover takes place when an UE is moving from RAP#1-1 to RAP#1-2 or from RAP#1-2 to RAP#1-1 (RAP#1-1 and RAP#1-2 are connected to the same BVLR#1).

Inter-BVLR handover means the handover between RAPs that is connected to different BVLR. In the Inter-BVLR handover case, authentication to a new BVLR is required. In this case, acquisition of information that is required for authentication from prior BVLR or new AKA process using BHLR are required. In the former case, a new secure channel is required. The new channel may used only when handover takes place. For the network efficiency, the latter authentication method that uses existing channel between BVLR. and BHLR is preferred. In the Inter-BVLR handover (BVLR changing handover), it is more efficient to perform another AKA process rather than to perform re-authentication process.

TABLE 2 shows characteristics of two handovers.

TABLE 2

|  | Intra-BVLR handover | Inter-BVLR handover |
|---|---|---|
| Definition | Movement among different RAPs in one BVLR | Movement among RAPs that are connected different BVLR |
| Possibility of taking place of handover | High | Low |
| Authentication Protocol | Re-authentication protocol | BLAN-AKA |
| Key update | TK : not necessary<br>SK : necessary | TK : necessary<br>SK : necessary |

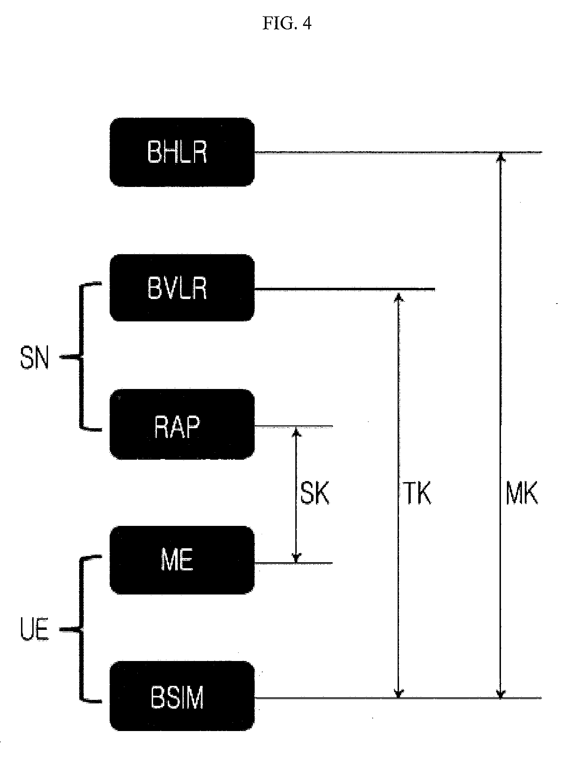

FIG. 4 illustrates structure of authentication protocol keys. The keys used in authentication protocol may be categorized into 3 types, MK, TK, SK. MK (master key), a secret key that BHLR and BSIM share beforehand, is a secret value for mutual authentication between a user and a network. This secret value is not disclosed to medium entities such as BVLR, RAP and ME. TK (temporary key), a temporary key originated from MK, is used to re-authentication in handover, etc. TK is generated by BHLR and transmitted to BVLR in AKA process. TK is a secret key that BSIM and BVLR share. SK (session key), a product of success authentication, is a key that is used to protect all traffics of wireless communication that uses binary CDMA.

AKA is a process for performing mutual authentication and key confirmation between a user and a network. AKA process should be performed for ensuring integrity and security of traffics.

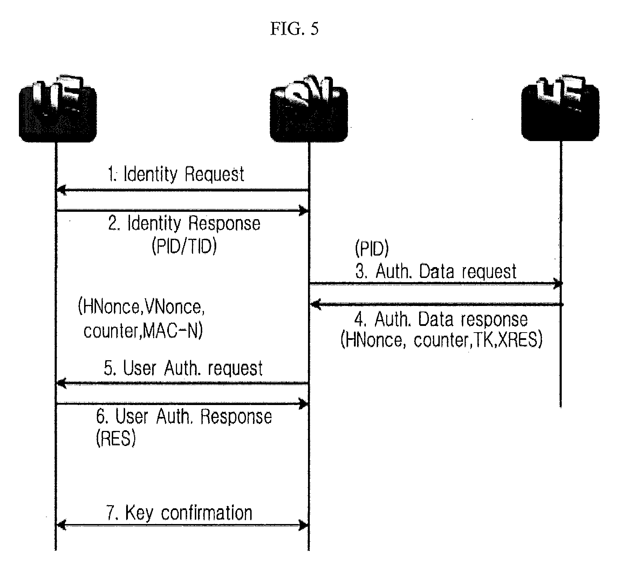

FIG. 5 is a diagram which briefly shows BLAN-AKA process.

Steps:

1. SN transmits terminal authentication request message (identity request) to UE.
Then, RAP only relays communications between UE and BVLR until session key (SK) is received from BVLR.

2. After receiving terminal authentication request message (identity request message), UE transmits terminal authentication response message (identity response message) to SN. The terminal authentication response message (identity response message) comprises PID (Permanent ID: permanent user ID) or TID (Temporary ID: Temporary user ID). PID is permanent identification of a user which is registered to HE by BSIM. TID is temporary identification that is received from mutually authenticated SN (particularly BVLR) through former AKA process. TID is used to protect secrecy of user location by hiding PID.

3. BVLR transmits PID received from UE to BHLR to acquire user data that is necessary for AKA process. If BVLR received TID, BVLR finds PID that matches to the received TID and transmits the PID to BHLR. If BVLR could not find PID that matches to the received TID, BVLR requests transmission of PID to UE and return to step 2. After receiving PID, BHLR generates random number 'HNonce' that corresponds to BHLR and calculates TK (temporary key) using KDF (Key Derivation Function) and XRES using MAC (Message Authentication Code). Then, BHLR transmits HNonce, TK, XRES, and counter to BVLR. The counter is similar to SQN in 3GPP.

[Formula 1]

$$TK = KDF(MK, HNonce, counter)$$

$$XRES = MAC(MK, HNonce, counter)$$

4. After receiving necessary data in step 3, BVLR authenticates the user. That is, BVLR authorized by BHLR authenticates the user using BLAN-AKA protocol. For the user authentication, BVLR generates a random number VNonce that corresponds to itself (BVLR) and calculates MAC-N by using the VNonce and TK. The user authenticates networks, that is, SN and HE by using MAC-N. BVLR transmits HNonce, VNonce, MAC-N and counter to UE by using AKA request message.

[Formula 2]

$$MAC\text{-}N=MAC(TK, VNonce, counter)$$

5. UE authenticates the network by confirming MAC-N. If UE fails to authenticate the network, UE transmits authentication denial message to the network and terminates the connection. If UE successfully authenticates the network, UE confirms whether the received counter is within allowable range. If the counter is not within the allowable range, UE transmits a resynchronization request message for the resynchronization of the counter to BVLR, and then BVLR notifies the reception of the resynchronization request message to BHLR. BHLR updates the counter through checking the integrity of the message and may start a new AKA process. If the counter is within the allowable range, BSIM updates its own counter and generates a session key SK using VNonoce. BSIM calculates RES for the authentication of itself and transmits the RES to BVLR using AKA response message.

[Formula 3]

$$SK=KDF(TK, VNonce, counter)$$

$$RES=MAC(MK, HNonce, counter)$$

6. BVLR authenticates the user by confirming whether XRES and RES are identical. If BVLR successfully authenticates the user, BVLR generates SK using VNonce and TK, and transmits the SK to RAP. BVLR also transmits ANonce which is used in key confirmation process when BVLR transmits SK. Because ANonce is also used in re-authentication process, it is more efficient that BVLR generates ANonce and transmits it to RAP rather than RAP generates ANonce. BSIM of UE transmits SK to ME.

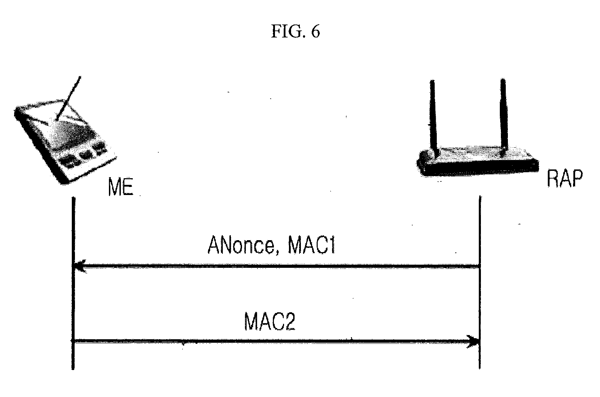

7. UE and RAP perform key confirmation process to confirm whether the SK that UE received and the SK that RAP received are identical with each other. It is preferred that the key confirmation process be performed using security algorithm for protecting traffics to be transmitted or received. FIG. 6 illustrates the key confirmation process of BLAN-AKA.

[Formula 4]

$$MAC1=mac(SK, ANonce)$$

$$MAC2=mac(SK, ANonce+1)$$

After successful completion of BLAN-AKA, BVLR and UE respectively stores TK and ANonce that are shared during AKA process for potential re-authentication. BVLR notifies successful completion of AKA process to BHLR, and then BHLR updates the counter.

When frequent handovers take place, re-authentication may reduce overhead so as to enable quick handover. Re-authentication may be performed using secret value that is shared by BSIM and BVLR. TK in BLAN-AKA protocol is one example of the secret value. TK may be updated through AKA process, authentication may be performed using TK when a handover between RAPs of one BVLR takes place.

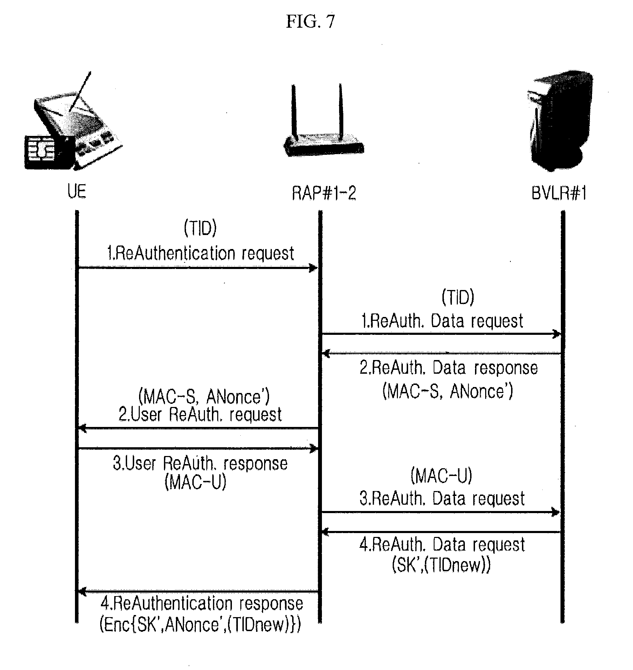

FIG. 7 illustrates re-authentication process when intra-BVLR handover takes place when RAP#1-1 and RAP#1-2 are connected to the same BVLR, BVLR#1 and UE moeves from RAP41-1 to RAP#1-2. Alike AKA process RAP receives SK' from BVLR and relays communications between UE and BVLR.

Steps:

1. UE transmits TID (temporary ID) to BVLR for re-authentication when Intra-handover takes place.

2. BVLR searches PID that corresponds to TID, generates a new session key SK' by using TK and ANonce that are stored during AKA process, and transmits newly generated ANonce' to UE. In comparison with AKA process, MAC-S is similar to MAC1 that are used in key confirmation process. Only SK' and ANonce' are used instead of SK and ANonce.

[Formula 5]

$$SK'=KDF(TK, ANonce)$$

$$MAC\text{-}S=MAC(SK', ANonce')$$

3. Alike BVLR, UE generates SK' by using TK and ANonce that are stored during former AKA process and ANonce' received from BVLR, <u>and proves MAC-S.</u> If MAC-S is proven to be right, UE calculates MAC-U and transmits the calculated MAC-U to BVLR as a response.

[Formula 6]

$$MAC\text{-}U=MAC(SK', ANonce'+1)$$

4. If BVLR successfully has proven the received MAC-U, BVLR transmits the encrypted value which is encrypted ANonce' encrypted by SK' to UE. If reallocation of TID is necessary, TIDnew, a new TID vale, is encrypted and transmitted, too.

Followings are comparison between re-authentication and AKA process.

AKA process uses formula 7 and re-authentication process uses formula 8.

[Formula 7]

$$SK=KDF(TK, VNonce, counter)$$

$$MAC1=mac(SK, ANonce)$$

$$MAC2=mac(SK, ANonce+1)$$

[Formula 8]

$$SK'=KDF(TK, ANonce)$$

$$MAC\text{-}S=MAC(SK', ANonce')$$

$$MAC\text{-}U=MAC(SK', ANonce'+1)$$

In re-authentication, it is obvious that ANonce is used instead of VNonce and ANonce' instead of ANonce. More specifically, Nonce used in the key confirmation process in AKA process is used to key derivation in later re-authentication. After the completion of re-authentication, ANonce' will be used to generate a new session key in next re-authentication.

Therefore, UE and BVLR should update their own ANonce to ANonce' respectively after the completion of re-authentication.

TABLE 3 shows comparison results between BLAN-AKA and re-authentication protocol.

TABLE 3

| | | BLAN-AKA | Re-authentication |
|---|---|---|---|
| Number of Message transmission | | 12(wireless transmission 5) | 8(wireless transmission 4) |
| Number of algorithm calculation | MAC/mac | 8 | 4 |
| | KDF | 4 | 2 |

The number of message transmission counted after UE starts to transmit PID or TID is 12, because BLAN-AKA process further notifies the completion of authentication to BHLR after the completion of authentication. The obvious reductions of message transmission number and calculation number in re-authentication protocol are due to the characteristic of re-authentication protocol that exclusion of BHLR and simultaneous performance of authentication and key exchange. In re-authentication, key confirmation process is unnecessary because the session key SK' is proven through authentication.

Unlike WLAN that performs terminal authentication, BLAN performs authentication that is similar to user authentication by using BSIM that is similar to USIM. This means the enhancement of terminal usage efficiency, and strong protection of individual privacy.

In BLAN re-authentication protocol, BSIM and BVLR may generate session key SK' that will be used in next re-authentication in advance by using ANonce and TK that are used in former authentication. Therefore, BLAN re-authentication protocol supports faster authentication and BLAN using BLAN re-authentication protocol may efficiently handle frequent handovers.

In BLAN-AKA process, the possibility of resynchronization is very low, because BHLR transmits only one authentication data according to the requests of BVLRs that are located in proximity to each other and BSIM and BHLR perform updates only after the completion of successful BLAN-AKA process.

A number of examples have been described above. Nevertheless, it will be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

**Claims**

1. A method for authenticating a key in a system comprised of a user terminal that comprises a master key for authentication, a serving network (SN) that comprises a wireless access point (RAP) and a visitor location register (VLR), and a home network that comprises an authentication server and a home location register (BHLR), the method comprising the steps of:

   transmitting terminal authentication response message that comprises identification information of the user terminal after receiving terminal authentication request message from the wireless access point;
   receiving user authentication request message that comprises at least two random numbers and a code information for message authentication from the wireless access point; and
   transmitting user authentication response message that comprises a first information generated by using at least one random number of the received random numbers, the code information and the master key.

2. The method of claim 1, wherein the identification information is one of permanent identification information or temporary identification information, and the temporary identification information is transmitted from the visitor location register (VLR).

3. The method of claim 2, wherein the random numbers are a first random number that is generated by home location register and a second random number that is generated by visitor location register.

4. The method of claim 3, wherein the user terminal generates a temporary key by using the master key and the first random number, and generates a session key by using the temporary key and at least one random number of the received random numbers.

5. The method of claim 1, wherein the user terminal and the serving network perform communications by using binary CDMA.

6. A method for authenticating a key in a system comprised of a user terminal that comprises a master key for authentication, a serving network (SN) that comprises a wireless access point (RAP) and a visitor location register (VLR), and a home network that comprises an authentication server and a home location register (HLR), the method comprising the steps of:

   transmitting terminal authentication request message to the user terminal;
   receiving terminal authentication response message that comprises an identification information of the user terminal from the user terminal;
   transmitting authentication data request message that comprises the received identification information to the home network;

receiving authentication data response message that comprises a first random number, a temporary key and a first information from the home network; and

transmitting user authentication request message that comprises the first random number, a second random number and a code information for message authentication to the user terminal.

7. The method of claim 6, wherein the identification information of the user terminal is one of permanent identification information or temporary identification information, and the temporary identification information is transmitted from the visitor location register (VLR).

8. The method of claim 7, wherein the random numbers are a first random number that is generated by home location register and a second random number that is generated by visitor location register.

9. The method of claim 8, wherein the code information for message authentication is generated by using the second random number and the temporary key.

10. The method of claim 8, wherein the first information is generated by home network using the master key and the first random number, and the user authentication response message comprises a second information that is generated by the user terminal using the master key and the first random number.

11. The method of claim 10, wherein the visitor location register generates a third random number for re-authentication of a key.

FIG. 1

FIG. 2

UE(User Equipment)

BSIM

ME(Mobile Equipment)

Wireless section between ME and RAP where binary CDMA applied

RAP

HE(Home Environment)

BVLR

SN(Serving Network)

BHLR

AuC

FIG. 3

FIG. 4

FIG. 5

1. Identity Request

2. Identity Response
(PID/TID)

(PID)
3. Auth. Data request

4. Auth. Data response
(HNonce, counter,TK,XRES)

(HNonce,VNonce,
counter,MAC-N)

5. User Auth. request

6. User Auth. Response
(RES)

7. Key confirmation

FIG. 6

ME

RAP

ANonce, MAC1

MAC2

FIG. 7

UE             RAP#1-2            BVLR#1

(TID)
1.ReAuthentication request

(TID)
1.ReAuth. Data request

2.ReAuth. Data response
(MAC-S, ANonce')

(MAC-S, ANonce')
2.User ReAuth. request

3.User ReAuth. response
(MAC-U)

(MAC-U)
3.ReAuth. Data request

4.ReAuth. Data request
(SK',(TIDnew))

4.ReAuthentication response
(Enc{SK',ANonce',(TIDnew)})

| | | |
|---|---|---|
| **INTERNATIONAL SEARCH REPORT** | | International application No. |
| | | **PCT/KR2010/000220** |

**A.    CLASSIFICATION OF SUBJECT MATTER**

*H04W 12/06(2009.01)i, H04W 12/04(2009.01)i, H04L 9/32(2006.01)i*

According to International Patent Classification (IPC) or to both national classification and IPC

**B.    FIELDS SEARCHED**

Minimum documentation searched (classification system followed by classification symbols)
H04W 12/06; H04L 12/24; H04L 12/66; H04L 9/32; H04W 12/04; H04L 12/22

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: binary CDMA, UE, SN, key authentication

**C.    DOCUMENTS CONSIDERED TO BE RELEVANT**

| Category* | Citation of document, with indication, where appropriate, of the relevant passages | Relevant to claim No. |
|---|---|---|
| A | KR 10-2005-0090561 A (KTFREETEL CO., LTD.) 14 September 2005<br>Claims 1-12 and figures 1-6 | 1-11 |
| A | KR 10-2008-0002382 A (KT CORPORATION) 04 January 2008<br>Claims 1-24 and figures 1-2 | 1-11 |
| A | KR 10-2009-0042868 A (QUALCOMM INCORPORATED) 30 April 2009<br>Claims 1-95 and figures 1-17 | 1-11 |
| A | KR 10-2008-0086127 A (SAMSUNG ELECTRONICS CO., LTD.) 25 September 2008<br>Claim 1 and figures 1-8 | 1-11 |

☐ Further documents are listed in the continuation of Box C.      ☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 25 FEBRUARY 2011 (25.02.2011) | **25 FEBRUARY 2011 (25.02.2011)** |

| Name and mailing address of the ISA/KR | Authorized officer |
|---|---|
| Korean Intellectual Property Office<br>Government Complex-Daejeon, 139 Seonsa-ro, Daejeon 302-701, Republic of Korea<br>Facsimile No.  82-42-472-7140 | Telephone No. |

Form PCT/ISA/210 (second sheet) (July 2009)

INTERNATIONAL SEARCH REPORT
Information on patent family members

International application No.

**PCT/KR2010/000220**

| Patent document cited in search report | Publication date | Patent family member | Publication date |
|---|---|---|---|
| KR 10-2005-0090561 A | 14.09.2005 | NONE | |
| KR 10-2008-0002382 A | 04.01.2008 | WO 2008-001988 A1 | 03.01.2008 |
| KR 10-2009-0042868 A | 30.04.2009 | CA 2659959 A1 | 28.02.2008 |
| | | CN 101507236 A | 12.08.2009 |
| | | EP 2070291 A2 | 17.06.2009 |
| | | JP 2010-502132 A | 21.01.2010 |
| | | US 2008-0070577 A1 | 20.03.2008 |
| | | WO 2008-024999 A2 | 28.02.2008 |
| KR 10-2008-0086127 A | 25.09.2008 | CN 101304319 A | 12.11.2008 |
| | | JP 2008-236754 A | 02.10.2008 |
| | | US 2008-0311906 A1 | 18.12.2008 |

Form PCT/ISA/210 (patent family annex) (July 2009)

**EP 2 523 486 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020100000176